# EUROPÄISCHE PATENTANMELDUNG

(11) **EP 3 736 943 A1**
(43) Veröffentlichungstag der Anmeldung: **11.11.2020**
(21) Anmeldenummer: 20172915.9
(22) Anmeldetag: 05.05.2020
(51) Int. Cl.: H02K 1/16, H02K 1/17, H02K 1/24, H02K 16/00

(54) **DREHENDE MEHRPHASEN-TRANSVERSALFLUSSMASCHINE**

(30) Priorität: 06.05.2019 DE 102019206460
(71) Anmelder: Fertigungsgerätebau A. Steinbach GmbH & Co. KG, 97616 Salz bei Bad Neustadt (DE)
(72) Erfinder: Gabel, Klaus, 97616 Salz bei Bad Neustadt (DE); Maul, Patrick, 97616 Salz bei Bad Neustadt (DE); Steinbach, Thorsten, 97616 Salz bei Bad Neustadt (DE)
(74) Vertreter: Hoffmann Eitle

(57) **Zusammenfassung**

Die Erfindung betrifft eine drehende Mehrphasen-Transversalflussmaschine (100), umfassend zumindest zwei drehende, vorzugsweise einphasige, Transversalflussmaschinen (1), die konzentrisch zu einer gemeinsamen Drehachse angeordnet sind. Jede einphasige Transversalflussmaschine (1) umfasst einen Stator, und einen Rotor, die konzentrisch zu der Drehachse der drehenden Mehrphasen-Transversalflussrotationsmaschine (100) ausgerichtet sind. Der Stator umfasst einen Statorkörper, der aus einem ferromagnetischen Statorkern ausgebildet ist, eine Vielzahl von magnetisch aktiven Elementen, und eine Statorspule. Der Rotor umfasst einen Rotorkörper, an dessen dem Stator zugewandter Umfangsfläche eine Vielzahl von ferromagnetischen Flussleitelementen in Umfangsrichtung voneinander beabstandet angeordnet ist. Die Statoren der zumindest zwei drehenden Transversalflussmaschinen (1) weisen eine Vielzahl von Querverbindern auf, die sich in Richtung der Drehachse erstrecken.

## Beschreibung

### Technisches Gebiet

Die Erfindung liegt auf dem Gebiet der elektrischen Antriebstechnik und betrifft eine drehende Mehrphasen-Transversalflussmaschine.

### Stand der Technik

Bekannt sind Transversalflussmaschinen mit stator- und rotorseitigen Wicklungen, die ringförmig ausgebildet sind und interagierende elektromagnetische Wechselfelder erzeugen. Die Bestromung der rotorseitigen Wicklung erfolgt hierbei über Schleifringe.

Des Weiteren sind Transversalflussmaschinen bekannt, die als permanentmagneterregte Synchronmaschinen ausgebildet sind und eine Ringwicklung im Stator sowie Permanentmagnete im Rotor aufweisen. Eine derartige Transversalflussmaschine, die als Außenläufermotor ausgebildet ist, wird beispielsweise in der WO 2011/080294 A1 beschrieben. Eine entsprechende Transversalflussmaschine, die als Innenläufermotor ausgeführt ist, ist aus der EP 0 677 914 A1 bekannt.

Die in der WO 2011/080294 A1 beschriebene Transversalflussmaschine weist beispielsweise einen Stator und einen Außenläufer auf, der um den Stator herum angeordnet ist, wobei der Stator zwei axiale Stirnseiten aufweist, mit einem Innenjoch des Stators, mit einem Kühlpfad, der radial innerhalb des Innenjochs angeordnet ist, wobei ein Kühlpfad entweder a) auf der axialen Stirnseite des Stators aus der Transversalflussmaschine heraustritt, die einer Eintrittsseite abgewandt ist, oder b) der Kühlpfad auf der axialen Stirnseite des Stators aus der Transversalflussmaschine heraustritt, die der Eintrittsseite zugewandt ist.

Ferner beschreibt die DE 10 2013 200 890 A1 eine Transversalflussmaschine, die einen Stator und einen gegenüber dem Stator verstellbar, insbesondere drehbar gelagerten Rotor aufweist. Der Stator ist mit einer Erregerwicklung versehen und zusätzlich mit einer Ankerwicklung. Der Rotor ist passiv ausgebildet und weist somit keine eigene Magnetfelderregungseinrichtung wie Permanentmagnete oder bestrombare Spulen auf. Der Rotor ist zumindest teilweise aus einem weichmagnetischen Material gefertigt.

Bei dieser Transversalflussmaschine werden die bezogen auf die Motorachse ringförmig ausgebildete Erregerwicklung im Stator sowie die Ankerwicklung, welche ebenfalls im Stator angeordnet ist, jeweils zur Erzeugung eines elektromagnetischen Feldes bestromt, wobei das Erregerfeld als elektromagnetisches Gleichfeld und das Ankerfeld als elektromagnetisches Wechselfeld gebildet werden. Auf Grund der Ausführung des Rotors aus weichmagnetischem Material breitet sich das Magnetfeld der Ankerwicklung, welches den Luftspalt zwischen Stator und Rotor überbrückt, in den Rotor hinein aus, wobei das Magnetfeld im Rotor mit dem Magnetfeld der Erregerwicklung im Stator interagiert, wodurch ein den Rotor im Motorbetrieb antreibendes Moment und im Generatorbetrieb bremsendes Moment erzeugt wird.

Der Vorteil dieser Ausführung liegt in dem konstruktiv besonders einfachen Aufbau des Rotors, für den weder Permanentmagnete noch erregbare Spulen erforderlich sind. Auch ein Käfigläufer im Rotor, so wie dies bei einem Asynchronmotor erforderlich ist, wird nicht benötigt. Der Rotor besteht lediglich zumindest teilweise aus einem weichmagnetischen Material, in welchem sich das in der Ankerspule im Stator erzeugte Magnetfeld ausbreiten kann. Als Material für den weichmagnetischen Rotor kommt beispielsweise ein Soft-Magnetic-Composite (SMC) in Betracht. Das Material kann auch für weichmagnetische Abschnitte im Stator eingesetzt werden.

### Gegenstand der Erfindung

Der Erfindung liegt die Aufgabe zu Grunde, eine drehende Mehrphasen-Transversalflussmaschine zu schaffen, die in der Lage ist, den konstruktiven Aufbau der Transversalflussmaschine, insbesondere des Rotors, weiter zu vereinfachen, wobei gleichzeitig eine hohe Leistungsdichte der Transversalflussmaschine erzielt werden kann. Hierbei soll insbesondere eine drehende Mehrphasen-Transversalflussmaschine bereitgestellt werden, die ohne Permanentmagnete im Rotor ausgebildet werden kann und gleichzeitig eine einfache Verbindung der einzelnen Transversalflussmaschinen, die zusammen die Mehrphasen-Transversalflussmaschine ausbilden, ermöglicht.

Diese Aufgabe wird gelöst durch eine drehende Mehrphasen-Transversalflussmaschine nach Anspruch 1. Bevorzugte Weiterbildungen der Erfindung sind in den abhängigen Ansprüchen gegeben.

Hierbei ist einer der Gedanken der vorliegenden Erfindung, dass, zumindest zwei drehende (bevorzugt drei), vorzugsweise einphasige, Transversalflussmaschinen zu einer gemeinsamen Drehachse konzentrisch angeordnet sind und Statoren der zumindest zwei drehenden, vorzugsweise einphasigen, Transversalflussmaschinen jeweils eine Vielzahl von Querverbindern aufweisen, die sich in Richtung der Drehachse der zumindest zwei drehenden Transversalflussmaschinen erstrecken, um eine drehende Mehrphasen-Transversalflussmaschine auszubilden. Die Querverbinder haben unter anderem den Vorteil, dass Elemente der Statorkerne der zumindest zwei Transversalflussmaschinen jeweils mechanisch und magnetisch miteinander gekoppelt werden können.

Anhand der vorgeschlagenen drehenden Mehrphasen-Transversalflussmaschine ist es möglich, Wirbelstromverluste zu verringern und dabei einen vergleichsweise einfachen Aufbau, insbesondere durch eine Art Stecksystem, der drehenden Mehrphasen-Transversalflussmaschine zu gewährleisten und somit die Herstellungs-, Wartungs- und Reparaturkosten der Transversalflussmaschine zu reduzieren. Besonders durch geschichtete Bleche können die Wirbelstromverluste weiter verringert werden.

Gemäß der vorliegenden Erfindung weist eine drehende Mehrphasen-Transversalflussmaschine zumindest zwei drehende (beispielsweise drei drehende), vorzugsweise einphasige, Transversalflussmaschinen auf, die konzentrisch zu einer gemeinsamen Drehachse angeordnet sind, wobei die drehenden Transversalflussmaschinen jeweils aufweisen: zumindest einen Stator und zumindest einen Rotor, die konzentrisch zu der Drehachse der drehenden Mehrphasen-Transversalflussrotationsmaschine ausgerichtet sind, wobei der Stator aufweist: einen Statorkörper, der aus einem ferromagnetischen Statorkern ausgebildet ist, eine Vielzahl von magnetisch aktiven Elementen, und eine Statorspule; und der Rotor aufweist: einen Rotorkörper, an dessen dem Stator zugewandter Umfangsfläche eine Vielzahl von ferromagnetischen Flussleitelementen in Umfangsrichtung voneinander beabstandet angeordnet sind und die Statoren der zumindest zwei drehenden Transversalflussmaschinen jeweils eine Vielzahl von Querverbindern aufweisen, die sich in Richtung der Drehachse der zumindest zwei drehenden Transversalflussmaschinen erstrecken.

Mit der erfindungsgemäßen Transversalflussmaschine können Wirbelstromverluste minimiert und somit die Leistungsfähigkeit der Transversalflussmaschine gesteigert werden. Ferner werden Hystereseverluste verringert. Generell können mit der erfindungsgemäßen, drehenden Mehrphasen-Transversalflussmaschine höhere Schubfaktoren im Vergleich zu konventionellen Permanentmagnet-Maschinen erreicht werden.

Die drehende Mehrphasen-Transversalflussmaschine kann beispielsweise in einem Arbeitsumfeld mit erhöhter Temperatur eingesetzt werden, da das Sekundärteil thermisch entkoppelt werden kann. Ein weiteres Anwendungsgebiet liegt insbesondere auf Grund des hochpoligen Charakters der Transversalflussmaschine im Bereich langsam drehender Motoren und/oder Generatoren.

Die Querverbinder können entlang einer Breite einer jeweiligen Transversalflussmaschine verlaufen oder die zumindest zwei Transversalflussmaschinen können gemeinsame Querverbinder aufweisen, die die Transversalflussmaschinen verbinden.

Des Weiteren ist es bevorzugt, dass der Rotorkörper aus einer Kombination aus einem nicht ferromagnetischen und einem ferromagnetischen Material ausgebildet ist, um einen drehenden Antrieb zu gewährleisten.

Gemäß einer weiteren Ausführungsform der vorliegenden Erfindung ist der ferromagnetische Statorkern aus einer Vielzahl von in Richtung der Drehachse gestapelten oder geschichteten, insbesondere ringförmigen, Statorblechen ausgebildet, die bevorzugt in zumindest zwei voneinander in Richtung der Drehachse beabstandete Bündel aufgeteilt sind und die Statorspule zwischen den zumindest zwei Statorblechbündeln angeordnet ist.

Weiterhin ist es vorteilhaft, wenn der Rotor eine der Statorblechbündelung des Stators entsprechende Aufteilung aufweist und entsprechend dieser Aufteilung die an der dem Stator zugewandten Umfangsfläche angeordneten ferromagnetischen Flussleitelemente, insbesondere Rotorblechpakete, in zumindest zwei voneinander in axialer Richtung beabstandeten Ringen aus nicht-ferromagnetischem Material angeordnet sind, wobei bevorzugt die ferromagnetischen Flussleitelemente eines Rings zu den ferromagnetischen Flussleitelementen des anderen Rings um einen vorbestimmten Bruchteil einer Polpaarweite in Umfangsrichtung verschoben angeordnet sind.

Ferner ist es bevorzugt, dass die magnetisch aktiven Elemente des Stators in dem Statorkörper integriert sind, wobei sie bevorzugt in Umfangsrichtung voneinander beabstandet angeordnet sind.

Des Weiteren ist es vorteilhaft, wenn die magnetisch aktiven Elemente Permanentmagnete, insbesondere geformte Permanentmagnete, sind, deren jeweilige Längserstreckung parallel zur Drehachse der drehenden Mehrphasen-Transversalflussmaschine und deren jeweilige Quererstreckung in radialer Richtung ausgerichtet ist.

Gemäß einer weiteren Ausführungsform sind die Permanentmagnete jeweils so angeordnet, dass die sich abwechselnden Nord- und Südpole in Umfangsrichtung des Statorkörpers ausgerichtet sind.

Ferner ist es bevorzugt, dass die magnetisch aktiven Elemente des Stators an einer dem Rotor zugewandten Umfangsfläche des Stators, insbesondere in Umfangsrichtung voneinander beabstandet, angeordnet sind.

Gemäß einer Ausführungsform der vorliegenden Erfindung sind die magnetisch aktiven Elemente in Umfangsrichtung abwechselnd mit ihrem Nordpol und Südpol in radialer Richtung nach außen angeordnet.

Es ist gemäß einer Ausführungsform bevorzugt, dass die in Richtung der Drehachse benachbarten (oder in Richtung der Drehachse gegenüberliegenden) magnetisch aktiven Elemente die gleiche Polung aufweisen.

Gemäß einer weiteren Ausführungsform ist es vorgesehen, bei umgedrehter Polung der magnetisch aktiven Elemente die Flussleitelemente im Rotor ohne Versatz durchgängig auszuführen.

Des Weiteren ist es vorteilhaft, dass die magnetisch aktiven Elemente in zumindest zwei in Richtung der Drehachse voneinander beabstandeten Ringen angeordnet sind, wobei bevorzugt die magnetisch aktiven Elemente eines Rings zu den magnetisch aktiven Elementen des anderen Rings in ihrer Polung um eine Polweite in Umfangsrichtung verschoben sind. D.h., es liegen sich jeweils ein Nordpol und ein Südpol gegenüber.

Ferner ist es bevorzugt, dass sich die ferromagnetischen Flussleitelemente durchgehend oder unterbrochen, und insbesondere um einen Bruchteil einer Polpaarweite versetzt, über in etwa die gesamte Breite des Rotorkörpers in Richtung der Drehachse erstrecken. Bei der Anordnung, bei der sich die ferromagnetischen Flussleitelemente unterbrochen über die Breite des Rotorkörpers in Richtung der Drehachse erstrecken, sind die ferromagnetischen Flussleitelemente in Richtung der Drehachse bevorzugt durch einen ferromagnetischen, insbesondere aus geschichteten Blechen ausgebildeten, Zwischenring beabstandet. Der Zwischenring gewährleistet eine magnetische Koppelung, jedoch eine elektrische und mechanische Trennung. Insbesondere ist der Zwischenring dabei aus einem ferromagnetischen, vorzugsweise geblechtem Material, ausgebildet.

Es ist bevorzugt, dass bei der drehenden Mehrphasen-Transversalflussmaschine der Stator jeder Transversalflussmaschine ferner die bereits genannten Querverbinder aufweist, wobei die Querverbinder an ihren sich in Richtung der Drehachse erstreckenden Seiten vom Statorkern umschlossen sind. Mit anderen Worten sind die Querverbinder an ihren sich in Richtung der Drehachse erstreckenden Seiten vom Statorkern eingefasst. Somit wird ein besonders fester Verbund des Statorkerns erreicht.

Gemäß einer Ausführungsform der vorliegenden Erfindung sind die Querverbinder aus ferromagnetischem Material, bevorzugt aus einer Vielzahl von geschichteten Blechen, insbesondere Elektroblechen, ausgebildet.

Die Querverbinder können an den sich in Richtung der Drehachse A_{Dreh} erstreckenden Seiten mit einer Isolierung versehen sein. Auf diese Weise werden Kurzschlüsse vermieden.

Ferner ist es bevorzugt, dass die Statorbleche aus ferromagnetischem Material hergestellt sind.

Weiterhin ist es vorteilhaft, dass die Vielzahl von Querverbindern in Umfangsrichtung des Statorkörpers um einen vorbestimmten Bruchteil einer Polpaarweite zu der Vielzahl von magnetisch aktiven Elementen verschoben ist, beziehungsweise vorzugsweise mittig zum Pol verschoben ist.

Ebenfalls ist es bevorzugt, dass eine Anzahl der magnetisch aktiven Elemente, in Umfangsrichtung des Statorkörpers gezählt, ein Verhältnis von 2:1 zu der Anzahl der am Rotorkörper angeordneten Rotorblechpakete aufweist.

Gemäß einer Ausführungsform der vorliegenden Erfindung beträgt ein Luftspalt zwischen Stator und Rotor, insbesondere in Radialrichtung des Statorkörpers zwischen den magnetisch aktiven Elementen und den am Rotorkörper angeordneten Rotorblechpaketen, weniger als 5 mm, insbesondere weniger als 2 mm, weiter bevorzugt weniger als 1 mm.

Ferner ist es bevorzugt, dass der Stator radial innerhalb des Rotors angeordnet ist, d.h. die Transversalflussmaschine als "Außenläufer" ausgebildet ist, oder der Stator radial außerhalb des Rotors angeordnet ist, d.h. die Transversalflussmaschine als "Innenläufer" ausgebildet ist.

Des Weiteren ist es vorteilhaft, dass die zumindest zwei Rotations-Transversalflussmaschinen in ihrem Stator oder Rotor um 1/Z_{Anzahl} ^{∗} Polpaarweite in Umfangsrichtung zueinander verdreht angeordnet sind, wobei Z_{Anzahl} die Anzahl der Rotations-Transversalflussmaschinen ist.

### Kurze Beschreibung der Figuren

Fig. 1 zeigt eine schematische Vorderansicht einer herkömmlichen drehenden Transversalflussmaschine als Außenläufer gemäß dem Stand der Technik,
Fig. 2 zeigt eine schematische Vorderansicht einer drehenden Transversalflussmaschine als Außenläufer gemäß einer ersten Ausführungsform der vorliegenden Erfindung,
Fig. 3 zeigt eine schematische perspektivische Ansicht des Stators der drehenden Transversalflussmaschine von Fig. 2,
Fig. 4 zeigt eine schematische, vergrößerte Detailansicht A von Fig. 2,
Fig. 5 zeigt eine schematische, vergrößerte Detailansicht B von Fig. 3,
Fig. 6 zeigt eine schematische perspektivische Ansicht des Rotors der drehenden Transversalflussmaschine von Fig. 2,
Fig. 7 zeigt eine schematische, perspektivische Ansicht einer drehenden 3-Phasen-Transversalflussmaschine als Außenläufer gemäß einer Ausführungsform der vorliegenden Erfindung,
Fig. 8 zeigt eine schematische Vorderansicht einer drehenden Transversalflussmaschine als Innenläufer gemäß einer zweiten Ausführungsform der vorliegenden Erfindung,
Fig. 9 zeigt eine schematische perspektivische Ansicht des Stators der drehenden Transversalflussmaschine von Fig. 8,
Fig. 10 zeigt eine schematische, vergrößerte Detailansicht A von Fig. 8,
Fig. 11 zeigt eine schematische, vergrößerte Detailansicht B von Fig. 9,
Fig. 12 zeigt eine schematische perspektivische Ansicht des Rotors der drehenden Transversalflussmaschine von Fig. 8,
Fig. 13 zeigt eine schematische, perspektivische Ansicht einer drehenden 3-Phasen-Transversalflussmaschine als Innenläufer gemäß einer Ausführungsform der vorliegenden Erfindung,
Fig. 14 zeigt eine schematische Vorderansicht einer drehenden Transversalflussmaschine als Außenläufer und oberflächenmontierten Magneten gemäß einer dritten Ausführungsform der vorliegenden Erfindung,
Fig. 15 zeigt eine schematische perspektivische Ansicht des Stators der drehenden Transversalflussmaschine von Fig. 14,
Fig. 16 zeigt eine schematische, vergrößerte Detailansicht A von Fig. 14,
Fig. 17 zeigt eine schematische, vergrößerte Detailansicht B von Fig. 15,
Fig. 18 zeigt eine schematische perspektivische Ansicht des Rotors der drehenden Transversalflussmaschine von Fig. 14,
Fig. 19 zeigt eine schematische, perspektivische Ansicht einer drehenden 3-Phasen-Transversalflussmaschine als Außenläufer gemäß einer Ausführungsform der vorliegenden Erfindung.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden.

Dabei sind in den verschiedenen Figuren gleiche oder entsprechende Elemente jeweils mit den gleichen oder ähnlichen Bezugszeichen bezeichnet.

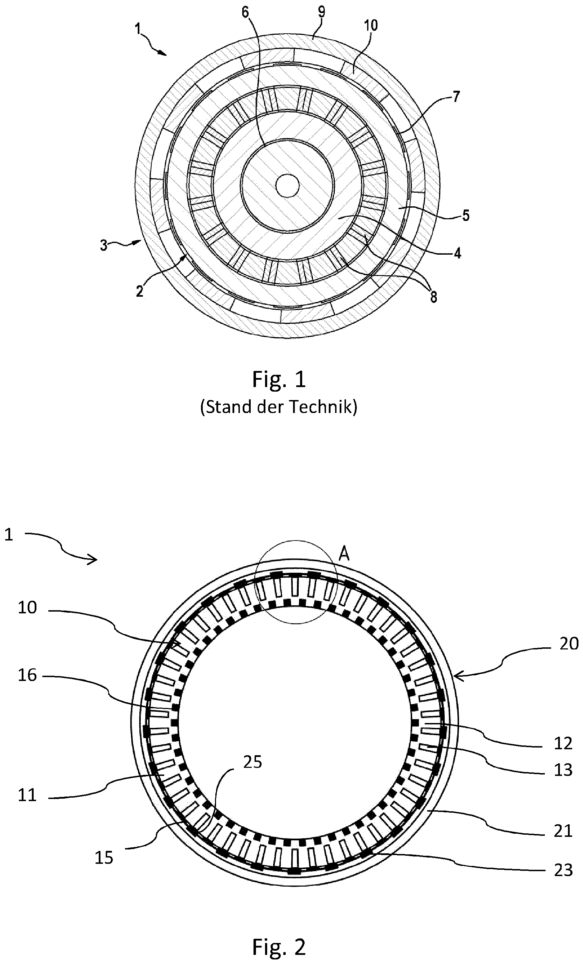

Fig. 1 zeigt eine schematische Vorderansicht einer herkömmlichen drehenden Transversalflussmaschine gemäß dem Stand der Technik. Die dargestellte Transversalflussmaschine 1, die als Außenläufermotor ausgebildet ist, weist einen radial innenliegenden Stator 2 und einen umgreifenden, außenliegenden Rotor 3 auf. Der Stator 2 weist eine bezogen auf die Motorachse ringförmige Erregerwicklung 4 auf, die einen innenliegenden Erregerrückschluss 6 aus weichmagnetischem Material umgreift, sowie im radial außenliegenden Bereich eine ebenfalls ringförmig ausgebildete Ankerwicklung 5, welche unmittelbar benachbart zu einem ringförmigen Luftspalt zwischen der Außenseite des Stators 2 und der Innenseite des Rotors 3 angeordnet ist. Die Erregerwicklung 4 ist mit Gleichstrom, die Ankerwicklung mit Wechselstrom zu beaufschlagen.

Der Stator 2 weist ferner über den Umfang verteilt eine Vielzahl von Statorzähnen 7 auf, die auf Klauen des Stators aufgesetzt sind und sich radial nach außen bis zu dem Luftspalt zwischen Stator und Rotor erstrecken, wobei die außenliegende Stirnseite der Statorzähne 7 an den ringförmigen Luftspalt angrenzt.

Zwischen den Erregerklauen des Stators, auf die die Statorzähne 7 aufgesetzt sind, sind Permanentmagnete 8 zur Kompensation des Streuflusses eingefügt.

Der Rotor 3 ist passiv aufgebaut und daher nicht in der Lage, selbsttätig ein Magnetfeld aufzubauen, das mit dem Magnetfeld der Erregerwicklung 4 interagiert. Vielmehr besteht der Rotor 3 aus weichmagnetischem Material, in das sich das Magnetfeld der Ankerwicklung 5 des Stators 2 ausbreitet. Der Rotor 3 umfasst einen radial außenliegenden Rückschlussring 9 und an der Innenseite des Rückschlussringes 9 angeordnete, sich radial nach innen erstreckende Rotorzähne 10, die über den Umfang verteilt an der Innenseite des Rückschlussringes angeordnet sind.

Fig. 2 zeigt eine schematische Vorderansicht einer drehenden Transversalflussmaschine 1 als Außenläufer gemäß einer ersten bevorzugten Ausführungsform der vorliegenden Erfindung. Wie der Fig. 2 entnommen werden kann, weist die gezeigte Transversalflussmaschine 1 ebenfalls einen Stator 10 und einen Rotor 20 auf, die beide konzentrisch zu einer Drehachse A_{Dreh} der drehenden Transversalflussmaschine 1 angeordnet sind. In der hier dargestellten Ausführungsform ist der Stator 10 radial innenliegend angeordnet und der Rotor 20 ist in Bezug auf den Stator 10 außenliegend angeordnet. Mit anderen Worten umgreift der Rotor 20 den Stator 10, womit es sich bei der dargestellten drehenden Transversalflussmaschine 1 um eine Transversalflussmaschine als "Außenläufer" handelt.

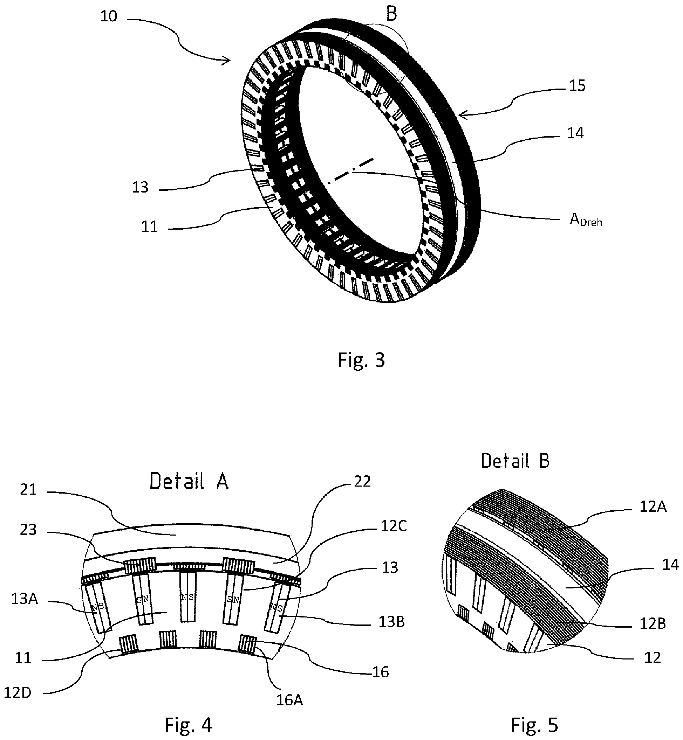

Wie in Fig. 2 gezeigt ist, weist der Stator 10 einen Statorkörper 11, der aus einem ferromagnetischen Statorkern ausgebildet ist und eine Umfangsfläche 15 aufweist, eine Vielzahl von magnetisch aktiven Elementen 13 und eine Statorspule 14 (siehe Fig. 3) auf. Des Weiteren weist der Rotor 20 einen Rotorkörper 21 auf, an dessen dem Stator 10 zugewandter Umfangsfläche 25, d.h. der Innenumfangsfläche des Rotors 20, Innenringe 22 (nachfolgend auch einfach als "Ring" bezeichnet) mit einer Vielzahl von ferromagnetischen Flussleitelementen 23 in Umfangsrichtung des jeweiligen Rings 22 voneinander beabstandet angeordnet ist.

Des Weiteren zeigt Fig. 3 eine schematische perspektivische Ansicht des Stators 10 der drehenden Transversalflussmaschine 1 von Fig. 2. Wie der Fig. 3 und insbesondere der Detailansicht B (Fig. 5) der Fig. 3 entnommen werden kann, ist der ferromagnetische Statorkern aus einer Vielzahl von in Richtung der Drehachse A_{Dreh} geschichteten bzw. gestapelten Statorblechen 12 ausgebildet. Die einzelnen Statorbleche 12 sind ringförmig ausgebildet und weisen eine Vielzahl von ersten Ausschnitten 12C auf, in welche die Vielzahl an magnetisch aktiven Elementen 13 eingesetzt ist. Die Vielzahl an ersten Ausschnitten 12C ist in Umfangsrichtung der Statorbleche 12 mit einem vorbestimmten Abstand zueinander um den Umfang verteilt angeordnet. Hierbei entspricht die Anzahl der ersten Ausschnitte 12C der Anzahl an einzusetzenden magnetisch aktiven Elementen 13.

Ferner sind in der dargestellten Ausführungsform die Statorbleche 12 in zwei in Richtung der Drehachse voneinander beabstandete Bündel 12A, 12B von Statorblechen 12 aufgeteilt. In der gezeigten Ausführungsform bestehen die zwei Bündel 12A, 12B jeweils aus geschichteten Statorblechen 12. Wie insbesondere der Detailansicht B (Fig. 5) entnommen werden kann, ist die Längserstreckung der magnetisch aktiven Elemente 13, welche sich parallel zu der Drehachse A_{Dreh} erstrecken, so gewählt, dass sich die magnetisch aktiven Elemente 13 lediglich über die Breite eines der Blechbündel 12A, 12B erstrecken, womit zwischen den beiden Blechbündeln 12A, 12B ein Spalt bzw. ein Aufnahmeraum gebildet ist, in dem die Statorspule 14 aufgenommen bzw. gewickelt ist.

Wie der Fig. 3 sowie Fig. 4 weiter entnommen werden kann, weisen die Statorbleche zusätzlich zweite Ausschnitte 12D auf, in welche Querverbinder 16 eingesetzt sind, durch welche die beiden Blechbündel 12A, 12B mechanisch und magnetisch miteinander gekoppelt sind. Die Querverbinder 16 werden, in Richtung der Drehachse A_{Dreh} betrachtet, an ihren Seiten von den Blechbündeln 12A, 12B umschlossen und weisen jeweils eine Isolierung 16A auf, um Kurzschlüsse zu vermeiden.

Die Montage der Querverbinder 16 dabei erfolgt derart, dass die Querverbinder 16 in Richtung der Drehachse A_{Dreh} in die zweiten Ausschnitte 12D eingeschoben werden. Die Querverbinder 16 werden in die zweiten Ausschnitte 12D der Blechbündel 12A, 12B eingeschoben und mit diesen verbunden. Beispielsweise wird dies unter Zuhilfenahme eines Verbindungsmittels, insbesondere durch Vergießen oder Verkleben, erreicht. Durch Verbinden der Querverbinder mit dem Blechbündel 12A, 12B werden die Statorbleche 12 einer jeweiligen Transversalflussmaschine mechanisch und magnetisch miteinander gekoppelt sind.

Die Vielzahl an ersten Ausschnitten 12C ist in den Statorblechen radial außen angeordnet, wobei die Vielzahl an zweiten Ausschnitten 12D radial innen angeordnet ist. Bevorzugt sind beide Ausschnitte 12C, 12D in der Nähe der jeweiligen Außenkante des Statorblechs 12 angeordnet. Ferner sind die beiden Ausschnitte 12C, 12D, und damit die magnetisch aktiven Elemente 13 und Querverbinder 16 in Umfangsrichtung um einen Bruchteil einer Polpaarweite versetzt angeordnet, oder vorzugsweise mittig zum Pol.

Der Detailansicht A (Fig. 4) kann ferner entnommen werden, dass in der gezeigten Ausführungsform die magnetisch aktiven Elemente 13 als Permanentmagnete, insbesondere geformte Permanentmagnete, ausgebildet sind. Hierbei sind die Permanentmagnete so angeordnet, dass die gegenüberliegenden Pole der Permanentmagnete in Umfangsrichtung zueinander beabstandet ausgerichtet sind. Wie die Detailansicht A (Fig. 4) ebenfalls zeigt, sind jeweils benachbarte magnetisch aktive Elemente 13, insbesondere die Permanentmagnete, so angeordnet, dass sich die jeweils gleichen Pole beabstandet gegenüberliegen.

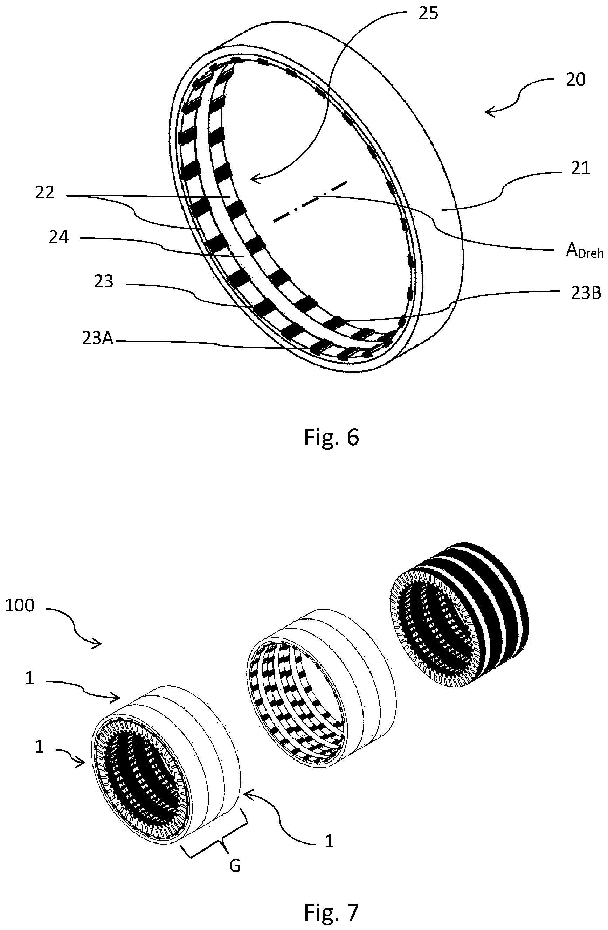

Fig. 6 zeigt eine schematische perspektivische Ansicht des Rotors 20 der drehenden Transversalflussmaschine 1 von Fig. 2. Der dargestellte Rotor 20 weist eine Vielzahl von ferromagnetischen Flussleitelementen 23 auf, welche ebenfalls über den Umfang eines jeweiligen Rings 22 in Umfangsrichtung voneinander mit einem vorbestimmten Abstand beabstandet angeordnet sind. Wie der Fig. 6 weiter entnommen werden kann, sind die ferromagnetischen Flussleitelemente 23 so ausgebildet, dass sie sich nicht über die komplette Breite des Rotorkörpers 21 erstrecken, sondern in die zwei Ringe 22 aus nicht-ferromagnetischem Material eingelegt sind, deren Breite in etwa der Breite der Blechbündel 12A, 12B entspricht.

Fig. 6 kann in Zusammenschau mit Fig. 4 ferner entnommen werden, dass der Abstand zwischen den ferromagnetischen Flussleitelementen 23 in einem jeweiligen Ring 22 so gewählt ist, dass in Umfangsrichtung des Rotorkörpers 21 gesehen jeweils ein ferromagnetisches Flussleitelement 23 auf jedes zweite magnetisch aktive Element 13 des Stators kommt. Mit anderen Worten ist die Anzahl der ferromagnetischen Flussleitelemente 23 in Umfangsrichtung des Rotorkörpers halb so groß wie die Anzahl der magnetisch aktiven Elemente 13 in Umfangsrichtung des Statorkörpers 11. Ferner sind die ferromagnetischen Flussleitelemente 23A eines jeweiligen Rings 22 zu den ferromagnetischen Flussleitelementen 23B des jeweils anderen Rings 22 in Umfangsrichtung um einen Bruchteil einer Polpaarweite bzw. vorzugsweise um eine Polweite verschoben angeordnet.

Die Flussleitelemente 23 sind derart ausgebildet, dass die Schichtung der Bleche der ferromagnetischen Flussleitelemente 23 in Umfangsrichtung vorliegt. Die Flussleitelemente 23 sind zur Flussisolation und zur mechanischen Stabilisierung in die Ringe 22 aus nicht ferromagnetischem Material derart eingesetzt, dass eine magnetische Koppelung, jedoch eine elektrische und mechanische Trennung, vorliegt, die durch einen ferromagnetischen, vorzugsweise geblechten Zwischenring 24 gewährleistet wird.

Des Weiteren zeigt Fig. 7 eine schematische, perspektivische Ansicht einer drehenden 3-Phasen-Transversalflussmaschine 100 als Außenläufer gemäß einer Ausführungsform der vorliegenden Erfindung. In Fig. 7 werden der Rotor und der Stator einzeln sowie im zusammengebauten Zustand dargestellt.

In der gezeigten Ausführungsform ist die 3-Phasen-Transversalflussmaschine 100 aus drei drehenden Transversalflussmaschinen 1 ausgebildet, die jeweils konzentrisch zur Drehachse A_{Dreh} in Axialrichtung über eine Breite G aneinandergereiht sind. In ihrem Rotor 20 (oder Stator) sind die Transversalflussmaschinen 1 um 1/Z_{Anzahl} ^{∗} Polpaarweite in Umfangsrichtung zueinander verdreht angeordnet, wobei Z_{Anzahl} die Anzahl der Rotations-Transversalflussmaschinen ist.

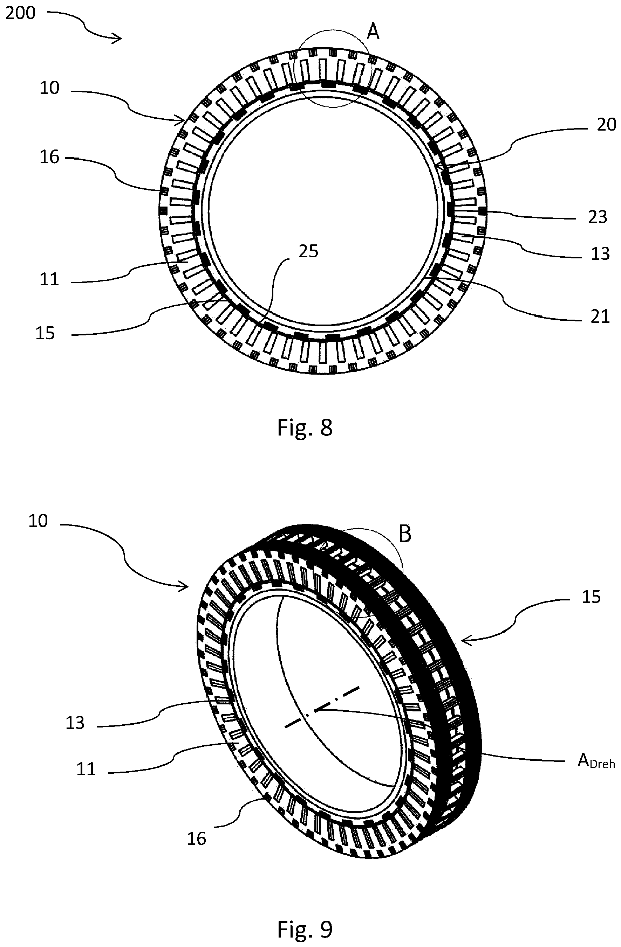

Fig. 8 zeigt eine schematische Vorderansicht einer drehenden Transversalflussmaschine als Innenläufer gemäß einer zweiten Ausführungsform der vorliegenden Erfindung. Der grundsätzliche Aufbau der gezeigten drehenden Transversalflussmaschine 200 entspricht dem Aufbau der drehenden Transversalflussmaschine 1 der ersten Ausführungsform, daher sind entsprechende bzw. äquivalente Elemente mit den gleichen Bezugszeichen versehen. Die drehende Transversalflussmaschine 200 der zweiten Ausführungsform unterscheidet sich hauptsächlich von der Transversalflussmaschine 1 der ersten Ausführungsform darin, dass der Stator 10 radial außenliegend angeordnet und der Rotor 20 in Bezug auf den Stator 10 radial innenliegend angeordnet ist. Mit anderen Worten umgreift der Stator 10 den Rotor 20, womit es sich bei der dargestellten drehenden Transversalflussmaschine 200 um eine Transversalflussmaschine als "Innenläufer" handelt. Wie in der ersten Ausführung ist der Stator 10 mit der Vielzahl an magnetisch aktiven Elementen 13, den Querverbindern 16 und der Statorspule versehen.

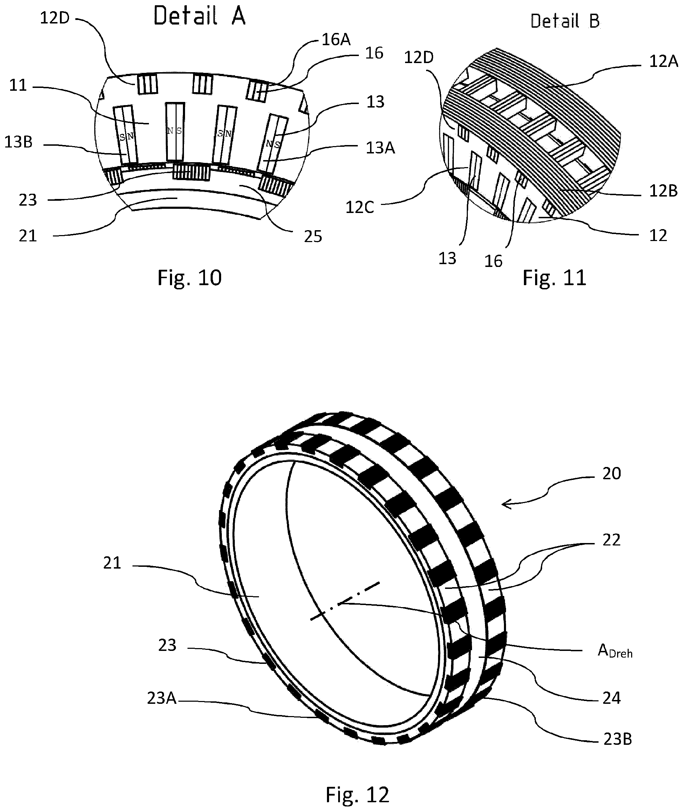

Fig. 10 zeigt eine schematische, vergrößerte Detailansicht A von Fig. 8. Wie der Fig. 8 näher entnommen werden kann, ist der prinzipielle Aufbau des Stators 10 gemäß der zweiten Ausführungsform in Radialrichtung gespiegelt zu dem Aufbau des Stators 10 gemäß der ersten Ausführungsform ausgebildet. Entsprechend sind die Querverbinder 16 radial am weitesten außen angeordnet, wohingegen die magnetisch aktiven Elemente 13 radial am weitesten innen angeordnet sind.

Die Vielzahl der magnetisch aktiven Elemente 13 sind in erste Ausschnitte 12C eingesetzt. Die ersten Ausschnitte 12C sind in Umfangsrichtung der Statorbleche 12 mit einem vorbestimmten Abstand zueinander um den Umfang verteilt angeordnet. Hierbei entspricht die Anzahl der ersten Ausschnitte 12C der Anzahl an einzusetzenden magnetisch aktiven Elementen 13.

Fig. 11, welche eine schematische, vergrößerte Detailansicht B von Fig. 9 zeigt, kann des Weiteren entnommen werden, dass der Statorkörper 11, beziehungsweise dessen Statorkern aus zwei Bündeln 12A, 12B von in Richtung der Drehachse A_{Dreh} geschichteten, ringförmigen Statorblechen 12 ausgebildet ist. Die Querverbinder 16 verbinden die Bündel 12A, 12B. Beispielsweise wird dies unter Zuhilfenahme eines Verbindungsmittels, insbesondere durch Vergießen oder Verkleben, erreicht. Die Querverbinder 16 werden dabei, in Richtung der Drehachse A_{Dreh} betrachtet, an ihren Seiten von den Blechbündeln 12A, 12B umschlossen und weisen jeweils eine Isolierung 16A auf, um Kurzschlüsse zu vermeiden. Zwischen den beiden Blechbündeln 12A, 12B ist ein Spalt bzw. ein Aufnahmeraum gebildet, in dem die Statorspule aufgenommen bzw. gewickelt ist.

Die Montage der Querverbinder 16 erfolgt derart, dass die Querverbinder 16 in Richtung der Drehachse A_{Dreh} in die zweiten Ausschnitte 12D eingeschoben werden. Durch Einschieben der Querverbinder 16 in die zweiten Ausschnitte 12D wird ein fester Verbund der Blechbündel 12A, 12B erreicht, so dass die Statorbleche 12 einer jeweiligen Transversalflussmaschine mechanisch und magnetisch miteinander gekoppelt sind.

Fig. 12 zeigt eine schematische perspektivische Ansicht des Rotors 20 der drehenden Transversalflussmaschine gemäß der zweiten Ausführungsform von Fig. 8. Wie Fig. 12 zeigt, ist der Rotor 20 wie in der ersten Ausführungsform derart ausgebildet, dass die Vielzahl von ferromagnetischen Flussleitelementen 23 auf zwei nicht ferromagnetischen Ringen angeordnet sind, die mittels eines Zwischenrings 24 aus einem ferromagnetischen Material in axialer Richtung voneinander beabstandet sind.

Die Flussleitelemente 23 sind derart ausgebildet, dass die Schichtung der Bleche der ferromagnetischen Flussleitelemente 23 in Umfangsrichtung erfolgt. Die Flussleitelemente 23 sind zur Flussisolation und zur mechanischen Stabilisierung in die Ringe 22 aus einem nicht ferromagnetischen Material derart eingesetzt, dass eine magnetische Koppelung, jedoch eine elektrische und mechanische Trennung, vorliegt, die durch einen ferromagnetischen, geblechten Zwischenring 24 gewährleistet wird.

Hier ist ebenfalls der Fig. 12 in Zusammenschau mit Fig. 10 zu entnehmen, dass der Abstand zwischen den ferromagnetischen Flussleitelementen 23 in einem der Ringe 22 so gewählt ist, dass in Umfangsrichtung des Rotorkörpers 21 gesehen, jeweils ein ferromagnetisches Flussleitelement 23 auf jedes zweite magnetisch aktive Element 13 des Stators 10 kommt. Mit anderen Worten ist eine Anzahl der ferromagnetischen Flussleitelemente 23 in Umfangsrichtung des Rotorkörpers 21 halb so groß wie die Anzahl der magnetisch aktiven Elemente 13 in Umfangsrichtung des Statorkörpers 11. Ferner sind die ferromagnetischen Flussleitelemente 23A eines der Ringe 22 zu den ferromagnetischen Flussleitelementen 23B des jeweils anderen Rings 22 in Umfangsrichtung um einen Bruchteil einer Polpaarweite bzw. vorzugsweise um eine Polweite verschoben angeordnet.

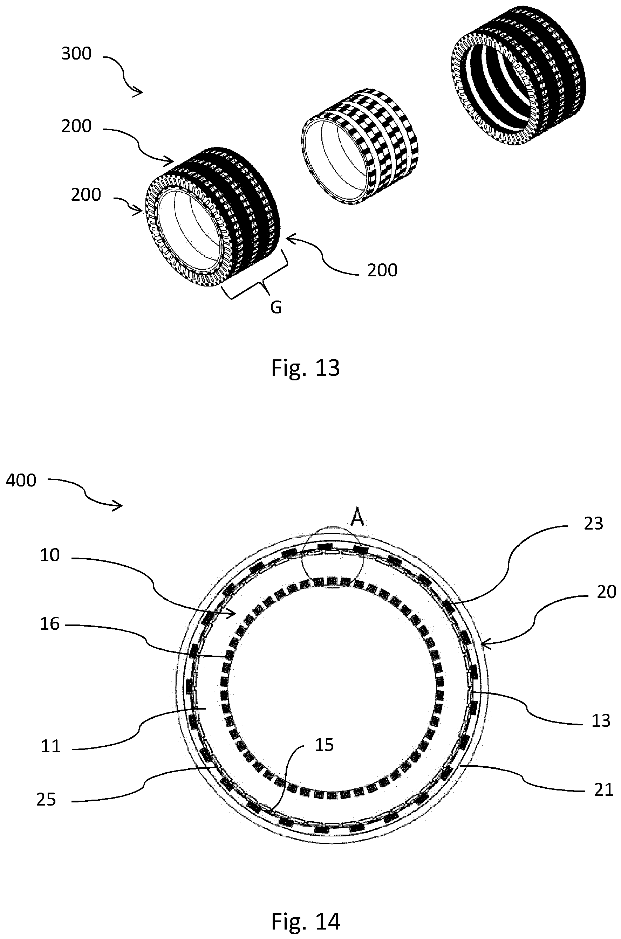

Fig. 13 zeigt eine schematische, perspektivische Ansicht einer drehenden 3-Phasen-Transversalflussmaschine 300 als Innenläufer gemäß einer Ausführungsform der vorliegenden Erfindung. In der gezeigten Ausführungsform ist die 3-Phasen-Transversalflussmaschine 300 aus drei drehenden Transversalflussmaschinen 200 gemäß der zweiten Ausführungsform ausgebildet, die jeweils konzentrisch zur Drehachse A_{Dreh} in Axialrichtung aneinandergereiht sind. In Fig. 13 werden der Rotor und der Stator einzeln sowie im zusammengebauten Zustand dargestellt.

In ihrem Rotor 20 (oder Stator) sind die Transversalflussmaschinen 200 um 1/Z_{Anzahl} ^{∗} Polpaarweite in Umfangsrichtung zueinander verdreht angeordnet, wobei Z_{Anzahl} die Anzahl der Rotations-Transversalflussmaschinen ist.

Fig. 14 zeigt eine schematische Vorderansicht einer drehenden Transversalflussmaschine 400 als Außenläufer und oberflächenmontierten Magneten gemäß einer dritten Ausführungsform der vorliegenden Erfindung. Der grundsätzliche Aufbau der gezeigten drehenden Transversalflussmaschine 400 entspricht dem Aufbau der drehenden Transversalflussmaschine 1 der ersten Ausführungsform. Daher sind entsprechende bzw. äquivalente Elemente mit den gleichen Bezugszeichen versehen. Die drehende Transversalflussmaschine 400 der dritten Ausführungsform unterscheidet sich hauptsächlich von der Transversalflussmaschine 1 der ersten Ausführungsform darin, dass die Vielzahl von magnetisch aktiven Elementen 13 nicht in den Statorkern 11 eingesetzt sind, sondern an dessen Außenumfangsfläche 15, die dem Rotor 20 zugewandt ist, angeordnet sind. Der restliche Aufbau der Transversalflussmaschine 400 ist ähnlich wie der der Transversalflussmaschine 1 gemäß der ersten Ausführungsform. Der Vorteil der dargestellten dritten Ausführungsform liegt insbesondere in der leichten Montierbarkeit.

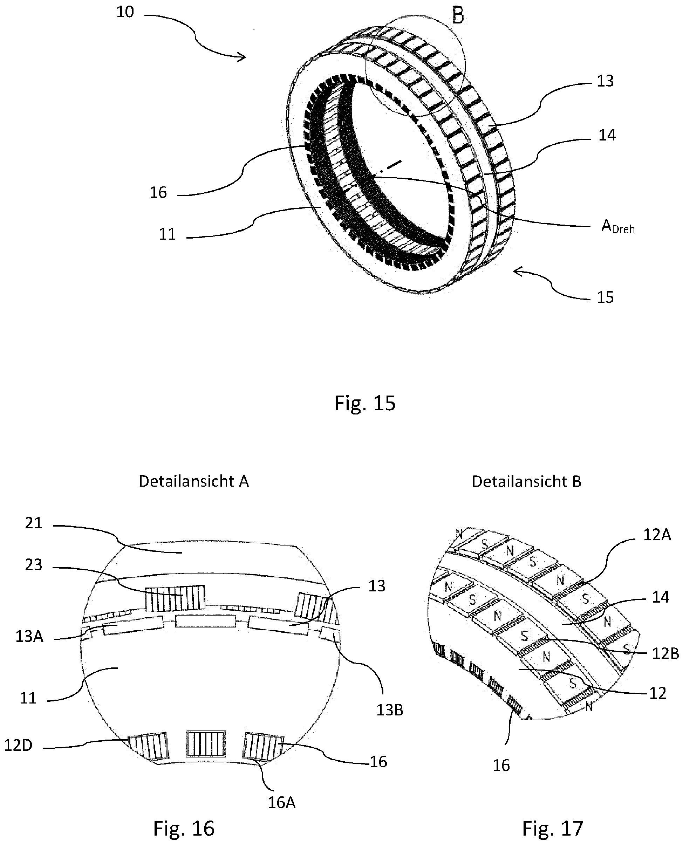

Fig. 15 zeigt eine schematische perspektivische Ansicht des Stators der drehenden Transversalflussmaschine 400 gemäß der dritten Ausführungsform von Fig. 14. Wie der Fig. 15, sowie der Fig. 16, welche eine schematische, vergrößerte Detailansicht A von Fig. 14 zeigt, entnommen werden kann, entspricht der Aufbau des Stators 10 gemäß der dritten Ausführungsform bis auf die Anordnung der magnetisch aktiven Elemente 13 im Wesentlichen dem Aufbau des Stators gemäß der ersten Ausführungsform.

Fig. 17 zeigt eine schematische, vergrößerte Detailansicht B von Fig. 15. Der Statorkern des Stators 11 der dritten Ausführungsform ist ebenfalls aus einer Vielzahl von geschichteten, ringförmigen Statorblechen 12 ausgebildet, welche in zwei Blechbündel 12A, 12B aufgeteilt sind. Die Breite der Blechbündel 12A, 12B ist so gewählt, dass sie in etwa der Längserstreckung der magnetisch aktiven Elemente 13 entspricht. Die magnetisch aktiven Elemente 13 sind in zwei Ringen auf die zwei Blechbündel 12A, 12B befestigt, bevorzugt geklebt, und in Umfangsrichtung des Stators 11 sind die magnetisch aktiven Elemente 13 eines Rings zu den magnetisch aktiven Elementen 13 des anderen Rings vorzugsweise fluchtend angeordnet, wobei die Polung zweier in Richtung der Drehachse A_{Dreh} benachbarten magnetisch aktiven Elemente der zwei Ringe vorzugsweise entgegengesetzt ist. Zwischen den Ringen mit den magnetisch aktiven Elementen 13 ist eine Spule 14 angeordnet.

Die Statorbleche 12 (bzw. die Blechbündel 12A, 12B) weisen zweite Ausschnitte 12D auf, in welche ähnlich wie in der ersten Ausführungsform Querverbinder 16 eingesetzt sind, durch welche die beiden Blechbündel 12A, 12B mechanisch und magnetisch miteinander gekoppelt sind. Die Querverbinder 16 werden, in Richtung der Drehachse A_{Dreh} betrachtet, an ihren Seiten von den Blechbündeln 12A, 12B umschlossen und weisen jeweils eine Isolierung 16A auf, um Kurzschlüsse zu vermeiden.

Die Montage der Querverbinder 16 erfolgt derart, dass die Querverbinder 16 in Richtung der Drehachse A_{Dreh} in die zweiten Ausschnitte 12D eingeschoben werden. Beispielsweise wird das Verbinden der Querverbinder 16 mit den Blechbündeln 12A, 12B unter Zuhilfenahme eines Verbindungsmittels, insbesondere durch Vergießen oder Verkleben, erreicht. Durch Verbinden der Querverbinder 16 mit dem Blechbündel 12A, 12B werden die Statorbleche 12 einer jeweiligen Transversalflussmaschine mechanisch und magnetisch miteinander gekoppelt sind.

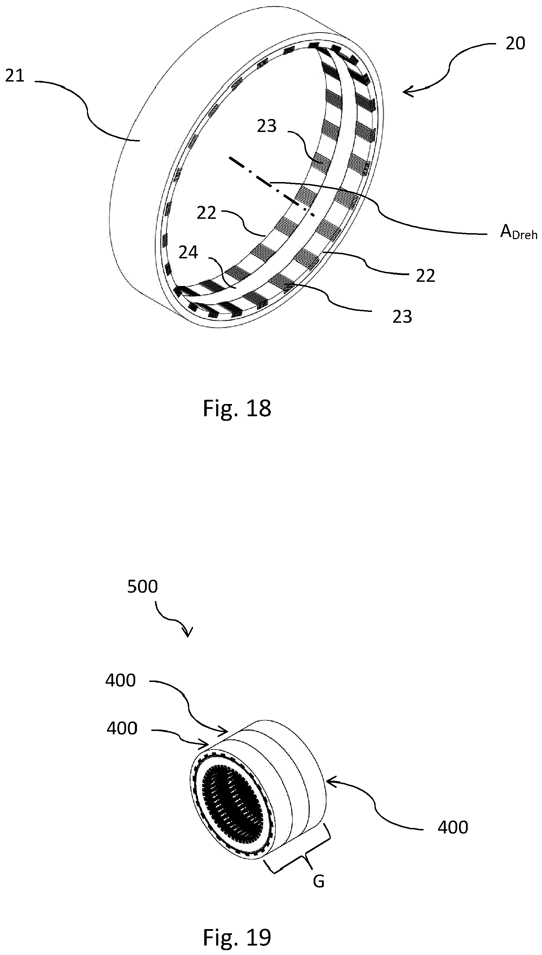

Fig. 18 zeigt eine schematische perspektivische Ansicht des Rotors 20 der drehenden Transversalflussmaschine von Fig. 14. Der dargestellte Rotor 20 der dritten Ausführungsform ist ähnlich aufgebaut wie derjenige der ersten Ausführungsform. Demnach wird auf die Erläuterungen zur ersten Ausführungsform verwiesen.

Des Weiteren zeigt Fig. 19 eine schematische, perspektivische Ansicht einer drehenden 3-Phasen-Transversalflussmaschine 500 als Außenläufer gemäß einer Ausführungsform der vorliegenden Erfindung. In Fig. 19 werden der Rotor und der Stator im zusammengebauten Zustand dargestellt.

In der gezeigten Ausführungsform ist die 3-Phasen-Transversalflussmaschine 500 aus drei drehenden Transversalflussmaschinen 400 gemäß der dritten Ausführungsform ausgebildet, die jeweils konzentrisch zur Drehachse A_{Dreh} in Axialrichtung aneinandergereiht sind. Die drei drehenden Transversalflussmaschinen 400 weisen jeweils Querverbinder 16 auf, die sich in der Ausführungsform in Richtung der Drehachse A_{Dreh} erstrecken.

Die Rotoren 20 der jeweiligen Transversalflussmaschinen 400 sind so angeordnet, dass die jeweiligen ferromagnetischen Flussleitelemente 23 von einer Transversalflussmaschine 400 zu der benachbarten Transversalflussmaschine 400 um einen Bruchteil einer Polpaarweite bzw. vorzugsweise um eine Polweite in Umfangsrichtung versetzt angeordnet sind. In dieser Ausführungsform sind somit die Statoren 10 der Transversalflussmaschinen 400 fluchtend zueinander angeordnet und die Rotoren 20 der Transversalflussmaschinen 400 zueinander versetzt angeordnet. In einer alternativen Ausführungsform können die Statoren 10 der Transversalflussmaschinen 400 um einen Bruchteil einer Polpaarweite bzw. vorzugsweise um eine Polweite in Umfangsrichtung versetzt angeordnet sein und die Rotoren 20 der Transversalflussmaschinen 400 zueinander fluchtend angeordnet sein.

Aus der vorhergehenden Beschreibung erkennt der Fachmann, dass verschiedene Modifikationen und Variationen der Vorrichtung der Erfindung durchgeführt werden können, ohne den Umfang der Erfindung zu verlassen.

Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können.

Auch wenn in den zuvor beschriebenen Ausführungsformen eine bestimmte Anzahl von Komponenten genannt sind (beispielsweise eine Statorspule 14, drei Transversalflussmaschinen 400, etc.), kann gemäß weiterer Ausführungsformen eine andere Anzahl dieser Komponenten zur Anwendung kommen.

Eine weitere, in den Figuren nicht dargestellte Ausführungsform betrifft einen Innenläufer einer drehenden 3-Phasen-Transverfalflussmaschine, die ähnlich zu dem in Figur 19 dargestellten Außenläufer, jedoch als Innenläufer ausgebildet ist.

Die Mehrphasen-Transversalflussmaschine gemäß dieser Ausführungsform umfasst drei drehende Transversalflussmaschinen, die jeweils konzentrisch zu einer Drehachse in Axialrichtung aneinandergereiht sind. Die drei drehenden Transversalflussmaschinen weisen jeweils Querverbinder auf, die sich in Richtung der Drehachse der aneinandergereihten Transversalflussmaschinen erstrecken. Die Statorbleche (bzw. die Blechbündel) weisen zweite Ausschnitte auf, in welche ähnlich wie in der ersten Ausführungsform Querverbinder eingesetzt sind, durch welche die beiden Blechbündel mechanisch und magnetisch miteinander gekoppelt sind. Die Querverbinder werden, in Richtung der Drehachse betrachtet, an ihren Seiten von den Blechbündeln umschlossen und weisen jeweils eine Isolierung auf, um Kurzschlüsse zu vermeiden.

Die Montage der Querverbinder erfolgt ähnlich wie bei den zuvor beschriebenen Ausführungsformen derart, dass die Querverbinder in Richtung der Drehachse in die zweiten Ausschnitte eingeschoben werden. Die Querverbinder werden in die zweiten Ausschnitte der Blechbündel eingeschoben und mit diesen verbunden. Beispielsweise wird dies unter Zuhilfenahme eines Verbindungsmittels, insbesondere durch Vergießen oder Verkleben, erreicht. Durch Verbinden der Querverbinder mit dem Blechbündel werden die Statorbleche einer jeweiligen Transversalflussmaschine mechanisch und magnetisch miteinander gekoppelt sind.

In ihrem Rotor oder Stator sind die Transversalflussmaschinen um 1/Z_{Anzahl} ^{∗} Polpaarweite in Umfangsrichtung zueinander verdreht angeordnet, wobei Z_{Anzahl} die Anzahl der Rotations-Transversalflussmaschinen ist.

Obwohl in den zuvor beschriebenen Ausführungsformen Querverbinder 16 aufgeführt sind, die die Bündel 12A, 12B von Statorblechen 12 einer Transversalflussmaschine verbinden, kann es gemäß einer weiteren Ausführungsform vorgesehen sein, dass die Querverbinder die Bündel 12A, 12B von Statorblechen 12 mehrerer Transversalflussmaschine miteinander verbinden.

## Patentansprüche

1. Drehende Mehrphasen-Transversalflussmaschine (100, 300, 500), umfassend zumindest zwei drehende, vorzugsweise einphasige, Transversalflussmaschinen (1, 200, 400), die konzentrisch zu einer gemeinsamen Drehachse (A_{Dreh}) angeordnet sind, wobei die drehenden Transversalflussmaschinen (1, 200, 400), umfassen:
einen Stator (10), und
einen Rotor (20), die konzentrisch zu der Drehachse (A_{Dreh}) der drehenden Mehrphasen-Transversalflussmaschine ausgerichtet sind, wobei
der Stator (10) umfasst:
einen Statorkörper (11), der aus einem ferromagnetischen Statorkern ausgebildet ist,
eine Vielzahl von magnetisch aktiven Elementen (13), und
eine Statorspule (14); und
wobei der Rotor (20) umfasst:
einen Rotorkörper (21), an dessen dem Stator (10) zugewandter Umfangsfläche (25) eine Vielzahl von ferromagnetischen Flussleitelementen (23) in Umfangsrichtung voneinander beabstandet angeordnet ist, wobei
die Statoren (10) der zumindest zwei drehenden Transversalflussmaschinen jeweils eine Vielzahl von Querverbindern (16) aufweisen, die sich in Richtung der Drehachse (A_{Dreh}) der zumindest zwei drehenden Transversalflussmaschinen (1) erstrecken.

2. Drehende Mehrphasen-Transversalflussmaschine (1, 300, 500) gemäß Anspruch 1, **dadurch gekennzeichnet, dass** die Querverbinder (16) entlang einer Breite einer jeweiligen Transversalflussmaschine (1, 200, 400) verlaufen, oder
die zumindest zwei Transversalflussmaschinen gemeinsame Querverbinder aufweisen, die die Transversalflussmaschinen verbinden.

3. Drehende Mehrphasen-Transversalflussmaschine (1, 300, 500) nach Anspruch 1 oder 2, bei welcher der Rotorkörper (21) aus einer Kombination aus einem nicht ferromagnetischen und einem ferromagnetischen Material ausgebildet ist.

4. Drehende Mehrphasen-Transversalflussmaschine (1, 300, 500) nach Anspruch 1, 2 oder 3, bei welcher der ferromagnetische Statorkern aus einer Vielzahl von in Richtung der Drehachse (A_{Dreh}) gestapelten, insbesondere ringförmigen, Statorblechen (12), ausgebildet ist, die bevorzugt in zumindest zwei voneinander in Richtung der Drehachse beabstandete Bündel (12A, 12B) aufgeteilt sind und zwischen den zumindest zwei Statorblechbündeln die Statorspule (14) angeordnet ist.

5. Drehende Mehrphasen-Transversalflussmaschine (1, 300) nach Anspruch 4, bei welcher der Rotor (20) eine der Statorblechbündelung des Stators (10) entsprechende Aufteilung aufweist und entsprechend dieser Aufteilung die an der dem Stator (10) zugewandten Umfangsfläche (25) angeordneten ferromagnetischen Flussleitelemente (23), insbesondere Rotorblechpakete, in zumindest zwei voneinander in Richtung der Drehachse beabstandeten Ringen (22) angeordnet sind, wobei bevorzugt die ferromagnetischen Flussleitelemente (23A) eines Rings (22) zu den ferromagnetischen Flussleitelementen (23B) des anderen Rings (22) um einen Bruchteil einer Polpaarweite in Umfangsrichtung verschoben angeordnet sind.

6. Drehende Mehrphasen-Transversalflussmaschine (1, 300) nach Anspruch 5, bei der die Ringe (22) durch einen, insbesondere ferromagnetischen, Zwischenring (24) beabstandet sind, wobei bevorzugt ist, dass der Zwischenring geschichtetes Blechmaterial umfasst.

7. Drehende Mehrphasen-Transversalflussmaschine (1, 300) nach einem der vorhergehenden Ansprüche, bei der die magnetisch aktiven Elemente (13) des Stators (10) in dem Statorkörper (11) integriert sind, wobei sie bevorzugt in Umfangsrichtung voneinander beabstandet angeordnet sind.

8. Drehende Mehrphasen-Transversalflussmaschine (1, 300) nach Anspruch 7, bei der die magnetisch aktiven Elemente (13) Permanentmagnete, insbesondere geformte Permanentmagnete, sind, deren jeweilige Längserstreckung parallel zur Drehachse (A_{Dreh}) und deren jeweilige Quererstreckung in radialer Richtung ausgerichtet ist.

9. Drehende Mehrphasen-Transversalflussmaschine (1, 300) nach Anspruch 8, bei der die Permanentmagnete, insbesondere geformte Permanentmagnete, jeweils so angeordnet sind, dass die sich abwechselnden Nord- und Südpole in Umfangsrichtung des Statorkörpers (11) ausgerichtet sind.

10. Drehende Mehrphasen-Transversalflussmaschine (500) nach einem der Ansprüche 1 bis 6, bei der die magnetisch aktiven Elemente (13) des Stators (10) an einer dem Rotor (20) zugewandten Umfangsfläche (15) des Stators (10), insbesondere in Umfangsrichtung voneinander beabstandet angeordnet sind.

11. Drehende Mehrphasen-Transversalflussmaschine (500) nach Anspruch 10, bei der die magnetisch aktiven Elemente (13) in Umfangsrichtung abwechselnd mit ihrem Nordpol (13A) und Südpol (13B) nach außen wirkend angeordnet sind.

12. Drehende Mehrphasen-Transversalflussmaschine (500) nach Anspruch 10 oder 11, bei der die in Richtung der Drehachse benachbarten magnetisch aktiven Elemente (13) die gleiche Polung aufweisen.

13. Drehende Mehrphasen-Transversalflussmaschine (500) nach Anspruch 10 oder 11, bei der die magnetisch aktiven Elemente (13) in zumindest zwei in Richtung der Drehachse voneinander beabstandeten Ringen angeordnet sind, wobei bevorzugt die magnetisch aktiven Elemente (13) eines Rings zu den magnetisch aktiven Elementen des anderen Rings in ihrer Polung um einen Bruchteil der Polpaarweite in Umfangsrichtung verschoben sind.

14. Drehende Mehrphasen-Transversalflussmaschine (1, 300, 500) nach einem der Ansprüche 10 bis 13, bei der sich die ferromagnetischen Flussleitelemente (23) durchgehend oder unterbrochen über in etwa die gesamte Breite des Rotorkörpers in Richtung der Drehachse (A_{Dreh}) erstrecken.

15. Drehende Mehrphasen-Transversalflussmaschine (1, 300, 500) nach einem der vorhergehenden Ansprüche, bei der die Querverbinder (16) an ihren sich in Richtung der Drehachse (A_{Dreh}) erstreckenden Seiten vom Statorkern abschnittsweise umschlossen sind, insbesondere im Bereich von in Richtung der Drehachse beabstandeten Bündel (12A, 12B) des Statorkerns.

16. Drehende Mehrphasen-Transversalflussmaschine (1, 300, 500) nach einem der vorangegangenen Ansprüche, wobei die Querverbinder (16) aus ferromagnetischem Material, bevorzugt aus einer Vielzahl von geschichteten Blechen, insbesondere Elektroblechen, ausgebildet sind.

17. Drehende Mehrphasen-Transversalflussmaschine (1, 300, 500) nach einem der vorangegangenen Ansprüche, wobei die Querverbinder (16) an den sich in Richtung der Drehachse A_{Dreh} erstreckenden Seiten mit einer Isolierung (16A) versehen sind.

18. Drehende Mehrphasen-Transversalflussmaschine (1, 300, 500) nach einem der vorhergehenden Ansprüche, bei der die Statorbleche (12) aus ferromagnetischem Material hergestellt sind.

19. Drehende Mehrphasen-Transversalflussmaschine (1, 300, 500) nach einem der vorangegangenen Ansprüche, bei der die Vielzahl von Querverbindern (16) in Umfangsrichtung des Statorkörpers (11) um einen Bruchteil einer Polpaarweite zu der Vielzahl von magnetisch aktiven Elementen (13) verschoben ist.

20. Drehende Mehrphasen-Transversalflussmaschine (1, 300, 500) nach einem der vorangegangenen Ansprüche, wobei ein Luftspalt zwischen Stator und Rotor, insbesondere in Radialrichtung des Statorkörpers (11) zwischen den magnetisch aktiven Elementen (13) und den am Rotorkörper (21) angeordneten ferromagnetischen Flussleitelementen (23), weniger als 5 mm, insbesondere weniger als 2 mm, weiter bevorzugt weniger als 1 mm beträgt.

21. Drehende Mehrphasen-Transversalflussmaschine (1, 300, 500) nach einem der vorhergehenden Ansprüche, bei welcher der Stator (10) radial innerhalb des Rotors (20) angeordnet ist oder der Stator (10) radial außerhalb des Rotors (20) angeordnet ist.

22. Drehende Mehrphasen-Transversalflussmaschine (1, 300, 500) nach einem der vorhergehenden Ansprüche, bei welcher die zumindest zwei Rotations-Transversalflussmaschinen (1, 200, 400) in ihrem Stator oder Rotor um 1/Z_{Anzahl} ^{∗} Polpaarweite in Umfangsrichtung zueinander verdreht angeordnet sind, wobei Z_{Anzahl} die Anzahl der Rotations-Transversalflussmaschinen (1, 200, 400) ist.
